# EUROPÄISCHE PATENTSCHRIFT

(11) **EP 2 449 885 B1**
(45) Veröffentlichungstag und Bekanntmachung des Hinweises auf die Patenterteilung: **10.01.2018**
(21) Anmeldenummer: 11188388.0
(22) Anmeldetag: 09.11.2011
(51) Int. Cl.: A22B 7/00, A22B 5/00

(54) **Verfahren zum Zurverfügungstellen von handbetätigten Werkzeugen zum Bearbeiten von Schlachttieren sowie Anordnung zum Bearbeiten von Schlachttieren**
Method for providing manually actuated tools for processing slaughter animals and assembly for processing slaughter animals
Procédé de mise à disposition d'outils actionnés manuellement pour le traitement des animaux d'abbatage et dispositif pour le traitement des animaux d'abbatage

(30) Priorität: 09.11.2010 DE 102010060462
(43) Veröffentlichungstag der Anmeldung: 09.05.2012
(73) Patentinhaber: BANSS SCHLACHT- UND FÖRDERTECHNIK GMBH, 35216 Biedenkopf (DE)
(72) Erfinder: Pier, Holger, 48163 Münster (DE); Weide, Harald, 35216 Biedenkopf (DE); Schmidt, Frank, 35232 Dautphetal (DE)
(74) Vertreter: Stoffregen, Hans-Herbert

(56) Entgegenhaltungen:
- AU-B2- 424 827
- DE-A1-102004 027 576

## Beschreibung

Die Erfindung bezieht sich auf ein Verfahren zum Zurverfügungstellen von handbetätigten Werkzeugen zum Bearbeiten von Schlachttieren, gemäss Anspruch 1, die entlang eines Förderwegs in einem Arbeitsbereich mittels eines ersten Förderers gefördert werden. Auch nimmt die Erfindung Bezug auf eine Anordnung zum Bearbeiten von Schlachttieren, gemäss Anspruch 4, umfassend,
- einen Arbeitsbereich, in dem die Schlachttiere mit einem Werkzeug bearbeitet werden,
- einen die Schlachttiere entlang eines Förderwegs durch den Arbeitsbereich fördernden ersten Förderer,
- Aufnahmen für die Werkzeuge und
- einen entlang des Förderwegs verlaufenden Bearbeitungsbereich für Personen, die die Schlachttiere mit den Werkzeugen bearbeiten.

In lebensmittel- und tierkörperverarbeitenden Betrieben müssen aufgrund geltender Hygienevorschriften benutzte Werkzeuge wie Messer und Arbeitsbekleidung nach verschiedenen bzw. zwischen einzelnen Bearbeitungsschritten gereinigt werden. Beispielhaft ist das Ausnehmen der Eingeweide und der roten Organe von Schlachttieren zu nennen, d. h. nach dem Stand der Technik wird für jedes Schlachttier ein gesondertes Messer benutzt, das nach Beenden einer der Arbeiten gereinigt und/oder sterilisiert wird. Während des Bearbeitens wird das Schlachttier hängend gefördert und der Mitarbeiter, der die Arbeit durchführt, muss sich entsprechend entlang des Förderwegs bewegen.

Der DE-B-10 2006 011 299 ist eine Reinigungsstation für lebensmittel- und tierkörperverarbeitende Betriebe zu entnehmen, die sich im Arbeitsbereich der Mitarbeiter, die die verschiedenen Tätigkeiten durchführen, befindet. Hierdurch wird jedoch die Bewegungsfreiheit eingeengt und zudem kann nicht sichergestellt werden, dass für jede Bearbeitung tatsächlich ein gereinigtes Werkzeug benutzt wird.

Die DE-U-296 10 890 bezieht sich auf eine Anordnung zum Halbieren von Schlachtkörpern mittels Halbierungssägen, die mittels eines Kreisförderers durch eine Desinfektionskabine geführt werden, um desinfizierte Sägen zur Verfügung zu haben. Die Halbierungssäge wird von einer an einem Schlachtband stehenden Person erfasst, um diese sodann an das Schlachtband heranzuziehen. Hierzu wird zuvor die Halbierungssäge aus dem Transportweg des Kreisförderers herausgeschleust und an eine Laufbahn übergeben. Nach dem Halbieren eines Schlachtkörpers wird sodann die an einem Federzug hängende Halbierungssäge in ein Lastgehänge des Kreisförderers von Hand eingehängt, damit die Halbierungssäge der Desinfizierungseinrichtung zugeführt werden kann.

Gegenstand der DE-A-10 2004 027 576 sind ein Verfahren und eine Vorrichtung zum Entbluten von Schlachttieren und zum Auffangen des Blutes. Hierzu sind Entblutungssets vorgesehen, die mittels eines Förderers entlang des Transportweges von Schlachttieren unabhängig voneinander bewegt werden.

Eine Schlachtanlage ist der DE-A-40 37 208 zu entnehmen, die eine an zumindest einer Arbeitsstation vorbeiführende Schlachtbahn mit wenigstens einem zugeordneten Förderer umfasst. Die Arbeitsstation weist eine Drehbühne auf, in deren Bereich die Schlachtbahn entlang eines zur Drehachse der Drehbühne konzentrischen Kreises verläuft.

Aus der AU-B-424 827 ist eine Anordnung zum Zertrennen von Schlachttieren mittels einer Säge zu entnehmen. Die die Säge bedienende Person befindet sich auf einer Plattform, die entlang der Bearbeitungsstrecke, innerhalb der das Schlachttier durchtrennt wird, hin und her verstellbar ist.

Der vorliegenden Erfindung liegt die Aufgabe zugrunde, ein Verfahren und eine Anordnung der eingangs genannten Art so weiterzubilden, dass ohne Beeinträchtigung der Bewegungsfreiheit der das Bearbeiten von Schlachttieren durchführenden Personen gereinigte Messer zur Verfügung gestellt werden und dass diese nach dem Gebrauch stets einer Reinigung unterzogen werden.

Nach einem weiteren Aspekt der vorliegenden Erfindung soll für die Personen, die die Bearbeitung vornehmen, eine körperliche Erleichterung gegeben sein.

Zur Lösung von zumindest einem Aspekt der Erfindung wird verfahrensmäßig vorgesehen, dass mittels eines zweiten Förderers in den Förderweg des ersten Förderers Werkzeuge enthaltende Aufnahmen synchron mit der Förderung der Schlachttiere eingeschleust werden und dass die Aufnahmen innerhalb des Arbeitsbereichs mittels des zweiten Förderers synchron mit den Schlachttieren gefördert werden.

Abweichend von bekannten Verfahren werden die zum Bearbeiten der Schlachttiere benutzen Werkzeuge nicht aus einer Reinigungsstation entnommen, die sich im Arbeitsbereich befindet, sondern werden unmittelbar dort zur Verfügung gestellt, wo die Bearbeitung erfolgen soll, nämlich am Schlachttier.

Die Werkzeuge werden den Aufnahmen entnommen - hierbei kann es sich um Haken handeln, an denen die Werkzeuge wie Messer aufgehängt sind, oder um Halterungen mit einer Öffnung zum Einstecken der Schneide eines Messers und einer Befestigung wie klippsartige Klammer, die den Griff des Messer aufnimmt und hält, um die Arbeiten durchzuführen. Anschließend werden die Werkzeuge in die synchron mit den Schlachttieren mitgeförderten Aufnahmen zurückgehängt bzw. -gesteckt, um sodann einer Reinigung unterzogen zu werden.

Es besteht jedoch auch die Möglichkeit, dass die Messer mittels Magnetkraft an oder in den Aufnahmen gehalten werden. So kann eine Halterung zumindest einen insbesondere in Kunststoff eingebetteten Magneten aufweisen, um die Schneide des Messers anzuziehen und somit zu fixieren. Der Griff kann auf einer Auflage anliegen. Um den Kontakt zwischen der Schneide und der Halterung ungeachtet eines sicheren Fixierens zu minimieren, können Vorsprünge wie kegel- oder pyramidenartige Vorsprünge von der Halterung in dem Bereich ausgehen, in dem die Schneide fixiert wird. Hierdurch ist sichergestellt, dass ein einwandfreies Reinigen des Messers erfolgen kann.

Es wird folglich ein Werkzeugfördersystem zur Verfügung gestellt, das synchron zum Schlachtförderer mit den Schlachttieren läuft. Folglich werden die Aufnahmen im Arbeitsbereich mit der gleichen Geschwindigkeit wie die Schlachttiere gefördert.

Dabei ist insbesondere vorgesehen, dass Abstand und Anzahl der Aufnahmen auf die von dem ersten Förderer geförderten Schlachttiere derart abgestimmt werden, dass im Bearbeitungsbereich zwischen zwei aufeinanderfolgenden Schlachttieren eine Aufnahme zur Verfügung steht. Dabei kann die Aufnahme gegebenenfalls zwei Werkzeuge wie Schlachtmesser aufnehmen, um sicher zu gehen, dass auch dann ein Werkzeug zur Verfügung steht, wenn z. B. ein Werkzeug herabfällt.

Unabhängig hiervon sind die Aufnahmen zu den Schlachttieren derart positioniert, dass ein Kontakt zwischen den benachbarten Schlachttieren weder mit den Aufnahmen noch mit von diesen aufgenommenen Werkzeugen erfolgen kann, also eine Kreuzkontamination verhindert wird.

In Weiterbildung ist vorgesehen, dass von den Aufnahmen eine Schnellschärfeinrichtung für ein Werkzeug wie ein Messer ausgeht, die ebenfalls einer Reinigung unterzogen wird.

Die Aufnahme ist derart gestaltet, dass das von diesem aufgenommene Werkzeug während des Transports einwandfrei fixiert ist, gleichzeitig jedoch eine optimale Reinigbarkeit ermöglicht wird. Das Entnehmen des Werkzeuges aus der Aufnahme kann problemlos und ohne Behinderung erfolgen, ohne dass das Risiko besteht, das beim Entnehmen bzw. Zurückstecken bzw. -hängen ein ungewollter Kontakt mit einem Schlachttier erfolgt.

Des Weiteren sieht die Erfindung vor, dass ein Endlosförderer als der zweite Förderer verwendet wird und dass innerhalb der Förderstrecke des zweiten Förderers eine Reinigungs- und/oder Sterilisationsstation vorgesehen wird, durch die die Aufnahmen und damit die benutzten Werkzeuge gefördert und somit gereinigt und/oder sterilisiert werden.

Des Weiteren sieht die Erfindung vor, dass zum einfachen Entnehmen und Erfassen der Werkzeuge die Aufnahmen im Bearbeitungsbereich in Richtung der Personen verschwenkt werden, um problemlos ein gereinigtes und sterilisiertes Werkzeug entnehmen bzw. ein solches nach Gebrauch in die Aufnahme zurückhängen oder -stecken zu können.

Die Aufnahme läuft in der vorgeschwenkten Position synchron mit dem Schlachttier weiter, und zwar bis zum Ende des Bearbeitungsbereichs. Dabei besteht die Möglichkeit, dass die die Arbeiten durchführende Personen synchron mit der Bewegung des Schlachttieres mitbewegt werden. Hierzu kann im Bearbeitungsbereich ein Bodenförderer vorgesehen sein, auf dem sich die Personen befinden und die synchron mit der Förderbewegung der Schlachttiere bewegt werden. Um wieder in die Ausgangsposition zu gelangen, können die Person entgegen der Förderrichtung der Schlachttiere im Bearbeitungsbereich zurückgehen oder ein weiteres in entsprechender Richtung laufendes Förderband betreten. Anstelle von zwei Förderbändern kann auch ein umlaufendes Förderband vorgesehen sein. Während des Rückwegs bzw. des Rücktransports der Person kann diese eine Reinigungs- bzw. Desinfektionsstation passieren, um weiteren hygienischen Anforderungen zu genügen. Bei den zuvor genannten Lösungsvorschlägen handelt es sich jeweils um eigenerfinderische Lehren.

Dadurch, dass die Messer nach der Bearbeitung in die Aufnahmen zurückgesteckt bzw. zurückgehängt werden, tragen abweichend vom Stand der Technik die Mitarbeiter selbst keine Messer mit sich herum.

Die Erfindung zeichnet sich daher auch durch eine Anordnung zum Bearbeiten von Schlachttieren, umfassend
- einen Arbeitsbereich, in dem die Schlachttiere mit einem Werkzeug bearbeitet werden,
- einen die Schlachttiere entlang eines Förderwegs durch den Arbeitsbereich fördernden ersten Förderer,
- Aufnahmen für die Werkzeuge und
- einen entlang des Förderwegs verlaufenden Bearbeitungsbereich für Personen, die die Schlachttiere mit den Werkzeugen bearbeiten,
dadurch aus, dass die Anordnung einen die Aufnahmen fördernden zweiten Förderer aufweist, dass der zweite Förderer entlang des in dem Arbeitsbereich verlaufenden Förderwegs mit der Bewegung des ersten Förderers synchronisiert und in Bezug auf die Schlachttiere derart ausgelegt ist, dass zwischen aufeinanderfolgenden Schlachttieren eine Aufnahme zur Verfügung steht, die in dem Arbeitsbereich mit der gleichen Geschwindigkeit wie die Schlachttiere gefördert wird.

Dabei ist insbesondere vorgesehen, dass die Aufnahmen oder von dem zweiten Förderer ausgehende und mit den Aufnahmen verbundene Halterungen im Arbeitsbereich mit einer Verstelleinrichtung wie entlang des Förderwegs verlaufende Anlaufschiene derart wechselwirken, dass die Aufnahmen in Richtung des Bearbeitungsbereichs verstellt sind.

Bevorzugterweise ist der zweite Förderer ein Endlosförderer, in dessen Förderstrecke zumindest eine Reinigungs- und/oder Hygienestation zum Reinigen von in den Aufnahmen eingesteckten Werkzeugen angeordnet ist.

Die Aufnahme kann als Haken ausgebildet sein, an den ein Werkzeug wie Messer gehängt wird. Bevorzugterweise handelt es sich jedoch bei der Aufnahme um einen im Schnitt L-förmigen Träger, dessen einer Schenkel, der horizontal verläuft, eine Öffnung aufweist, in die das Werkzeug wie Schneide eines Messers einsteckbar ist. Zum Fixieren des Werkzeuges kann der Griff des Messers von einer klippsartigen Klammer fixiert sein, die vom verbleibenden Schenkel des Trägers ausgeht und der beim Transport insbesondere vertikal oder in etwa vertikal verläuft.

Es besteht jedoch auch die Möglichkeit, dass die Messer magnetisch fixiert werden. Hierzu können von den Aufnahmen oder Halterungen insbesondere in Kunststoff eingebettete Magnete ausgehen, die die Schneiden der Messer anziehen und fixieren.

Des Weiteren besteht die Möglichkeit, dass von der Aufnahme eine Schärfeinrichtung ausgeht, um zum Beispiel die Schneide eines Messers schärfen zu können. Die entsprechende Schärfeinrichtung wird gleichfalls zusammen mit der Aufnahme mit dem bzw. den in dieser vorhandenen Messer bzw. Messern durch die Reinigungs- und/oder Hygienisierungseinrichtung gefördert, um ein Reinigen bzw. Hygienisieren zu ermöglichen.

Unabhängig hiervon sollte im Bearbeitungsbereich zumindest ein die Personen entlang des Förderwegs fördernder Bodenförderer verlaufen.

Bevorzugterweise und eigenerfinderisch ist dabei vorgesehen, dass im Bearbeitungsbereich ein umlaufender oder zwei entlang des Förderwegs verlaufende Bodenförderer angeordnet ist bzw. sind, mittels dessen bzw. derer die Personen schlachttierseitig in Förderrichtung der Schlachttiere und im schlachttierfernliegenden Bereich entgegen der Förderrichtung transportierbar sind.

Ferner sollte sich im schlachttierfernliegenden Bereich eine Reinigungsstation wie Schürzenreinigungsstation befinden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: in Prinzipdarstellung und in Draufsicht einen Ausschnitt einer Schlachtstrasse,
- Fig. 2: einen Schnitt durch die Schlachtstrasse in einem Arbeitsbereich,
- Fig. 3: eine Vorderansicht einer Halterung mit einem Messer als Werkzeug,
- Fig. 4: die Halterung mit Messer gemäß Fig. 3 in Seitenansicht und
- Fig. 5: eine Prinzipdarstellung einer Schärfeinrichtung.

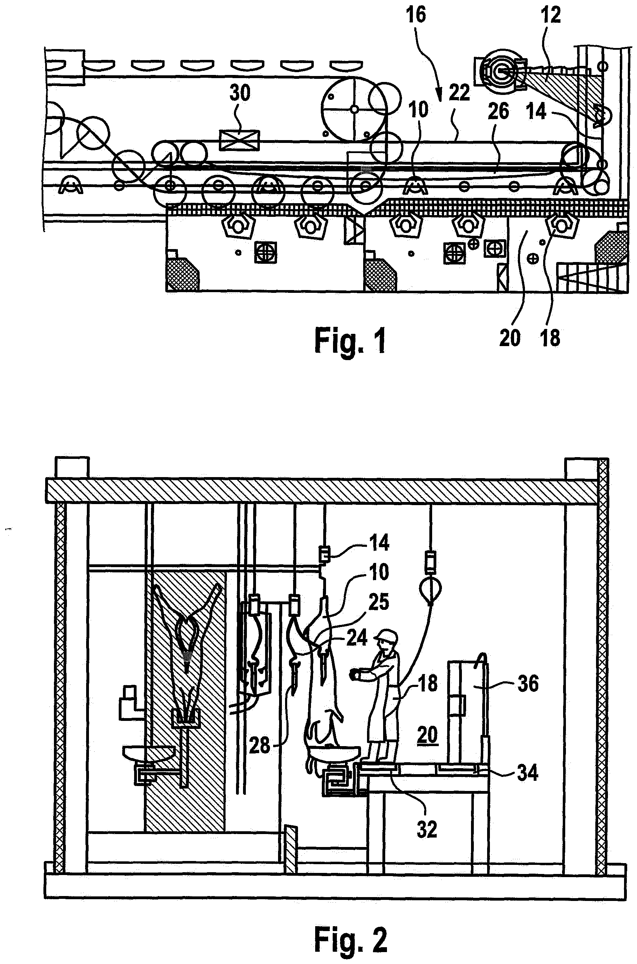

Der Fig. 1 ist ein Ausschnitt einer Schlachtstrasse in prinzipieller Darstellung zu entnehmen, in der Schlachttiere 10 wie Schweine ausgenommen werden. Dies erfolgt nach Öffnen der Schlachttiere in einer ersten Arbeitsstation bzw. einem ersten Arbeitsbereich 12 bevorzugterweise vollautomatisch mit einem Roboter. Die geöffneten Schlachttiere 10 werden von dem ersten Arbeitsbereich 12 mittels eines Förderers wie Kettenförderers 14 in einen zweiten Arbeitsbereich 16 gefördert, in dem die Innereien ausgenommen werden. Dies erfolgt manuell durch Personen 18, die sich in einem Bearbeitungsbereich 20 des Arbeitsbereichs 16 synchron mit der Förderbewegung der Schlachttiere 10 in Förderrichtung mitbewegen und dabei die Innereien lösen und herausnehmen. Aufgrund von Hygienevorschriften ist es erforderlich, dass für das Bearbeiten jedes einzelnen Schlachttieres 10 jeweils ein gereinigtes Messer benutzt wird. Hierzu ist erfindungsgemäß vorgesehen, dass entlang des Bearbeitungsbereichs 20, also innerhalb des zweiten Arbeitsbereichs 16 ein zweiter Förderer 22 mit Aufnahmen oder Halterungen 24 verläuft, wobei der zweite Förderer 22 zum einen synchron der Bewegung des ersten Förderers 14 folgt und zum anderen derart auf die Schlachttiere 10 ausgerichtet ist, dass die Aufnahmen oder Halterungen 24, bei denen es sich im Ausführungsbeispiel um Haken handelt, synchron mit der Bewegung der Schlachttiere 10 gefördert werden, also im Bearbeitungsbereich 20 die Aufnahmen oder Halterungen 24 mit der gleichen Geschwindigkeit wie die Schlachttiere 10 gefördert werden.

Des Weiteren besteht die Möglichkeit, dass im Bearbeitungsbereich 20 die Aufnahmen 24 - in den Fig. 1 und 2 als Haken ausgebildet - in Richtung der Personen 18 verschwenkt werden, so dass ein problemloses Erfassen möglich ist. Dies kann beispielsweise durch eine Anlaufschiene 26 erfolgen, die parallel zum Förderweg des zweiten Förderers 22 verläuft und raupenförmige Enden aufweist, wie dies prinzipiell der Fig. 1 zu entnehmen ist. Entsprechende Haken 24 sind aus Gründen der Übersichtlichkeit in der Fig. 1 nicht eingezeichnet.

In Fig. 2 sind die in Richtung des Bearbeitungsbereichs 20 verschwenkten Haken 24 mit dem Bezugszeichen 25 gekennzeichnet.

Da die Haken 24 synchron mit den Schlachttieren 10 gefördert werden, also mitlaufen, kann in Folge dessen ein problemloses Erfassen der von den Haken 24 herabhängenden Messer 28 durch eine der Personen 18 und anschließend das Bearbeiten der Schlachttiere 10 erfolgen.

Die erwähntermaßen in den Fig. 1 und 2 als Haken ausgebildeten Aufnahmen 24 sind dabei zu den Schlachttieren 10 derart angeordnet, dass eine Kreuzkontamination verhindert wird. Mit anderen Worten ist der Abstand zwischen der Aufnahme 24 und zu den Schlachttieren 10 derart gewählt, dass ein Kontakt verhindert wird. Entsprechend sind die Haken 24 zu den Schlachttieren 10 derart verschwenkbar, dass beim Herausnehmen der Messer 28 bzw. beim Zurückhängen ein ungewolltes Berühren der Schlachttiere 10 unterbleibt.

Nach der Bearbeitung, also im Ausführungsbeispiel dem Herauslösen der Innereien wird das benutzte Messer 28 auf einen freien Haken 24 zurückgehängt. Anschließend bewegt sich die Person 18 in die Ausgangsstellung, also an den Beginn des Bearbeitungsbereichs 20, um erneut ein gereinigtes Messer 28 von einem Haken 24 zu lösen und ein Schlachttier 10 zu bearbeiten.

Im Förderweg des zweiten Förderers 22 befindet sich eine Reinigungs- bzw. eine Hygienisierungsvorrichtung 30, die von den Haken 24 und den an diesen hängenden Messern 28 durchlaufen wird, so dass das erforderliche Reinigen und Hygienisieren der Messer 28 erfolgen kann.

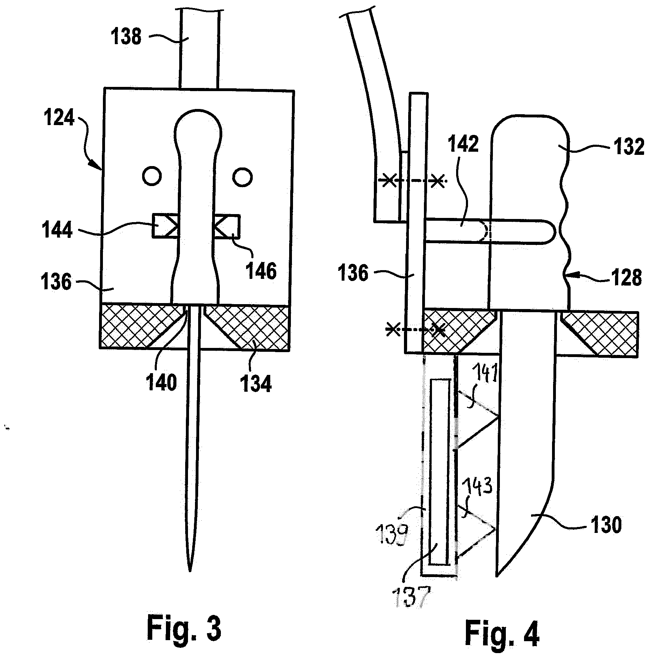

Den Fig. 3 und 4 ist eine bevorzugte Ausführungsform einer Aufnahme 124 zur Aufnahme eines Messers 28 zu entnehmen, das aus einer Schneide 130 mit Griff 132 besteht. Die Halterung oder Aufnahme 124 besteht aus einem im Schnitt L-förmigen Träger mit Basisplatte 134 und senkrecht zu dieser verlaufender Halteplatte 136, die über ein Gestänge 138 mit dem zweiten Förderer 22 verbunden ist. Die Basisplatte 134 weist eine schlitzförmige Durchbrechung 140 auf, in die die Schneide 130 des Messers 120 einsteckbar ist. Die Schneide 130 dringt in die schlitzförmige Aussparung 140 bis zum Griff 132 ein, der seinerseits von einer klippsartigen Klemmhalterung 142 aufgenommen und somit fixiert wird. Die Basisplatte 134 besteht vorzugsweise aus Kunststoff, wohingegen die Trägerplatte 136 und die Klemmhalterung 142 aus Edelstahl bestehen können. Die Schenkel 144, 146 der Klemmhalterung 142 bestehen vorzugsweise aus federndem Edelstahl.

Durch die Ausbildung der Halterung oder Aufnahme 124 ist ein sicheres Fixieren des Messers 128 bei gleichzeitigem problemlosen Herausziehen aus der Aufnahme 124 möglich. Ungeachtet dessen ist der Kontakt zwischen dem Messer 128 und der Halterung 124 minimiert, so dass eine umfassende Reinigung erfolgen kann. Die Aufnahme bzw. Halterung 124 wird gleichfalls beim Durchfahren der Reinigungs- und/oder Hygienisierungseinrichtung im erforderlichen Umfang gereinigt.

Der Fig. 4 ist eine weitere Möglichkeit zu entnehmen, wie ein Messer 128 fixiert von einer Aufnahme oder Halterung aufgenommen werden kann. So besteht die Möglichkeit, dass von der Aufnahme zumindest ein insbesondere in Kunststoff eingebetteter Magnet 137 ausgeht, auf den bei in der Aufnahme eingebrachtem Messer 128 dessen Schneide 130 ausgerichtet ist, so dass diese angezogen wird. Damit ein möglichst geringer Kontakt zwischen der Schneide 130 und der Aufnahme 124 im Bereich des Magneten 130 gegeben ist, können von der den Magneten 130 aufnehmenden Ummantelung 139 in Richtung der Schneide 130 sich erstreckende im Schnitt dreieckförmige Vorsprünge 141, 143 ausgehen, so dass ein im Wesentlichen punktuelles Anliegen der Schneide gegeben ist. Hierdurch wird sichergestellt, dass das Messer und somit die Schneide 130 problemlos gereinigt werden können, wenn das Messer 128 durch die Hygienisierungsvorrichtung 30 gefördert wird.

Erfolgt ein Fixieren des Messers 128 mittels eines oder mehrerer Magnete 137, so ist es nicht zwingend erforderlich, dass der Griff 132 klemmend gehalten wird. Vielmehr kann dieser z. B. auf dem Rand einer Öffnung aufliegen.

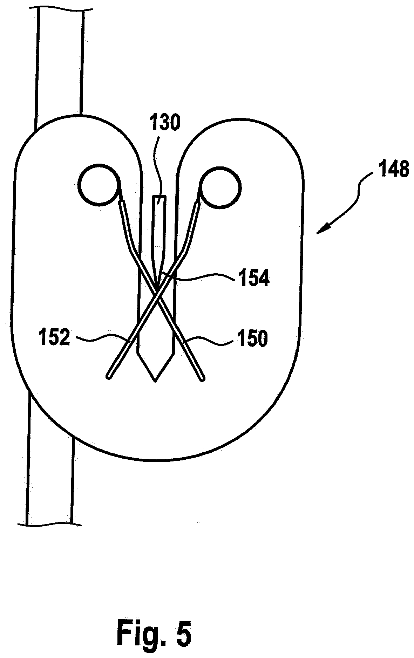

Anhand der Fig. 5 soll prinzipiell verdeutlicht werden, dass vor der Halterung 24 bzw. 124 bzw. von dem Gestänge 138 im Bereich der Halterung 24, 124 eine Schärfeinrichtung 148 ausgehen kann, die federnde Schärfelemente 150, 152 aufweist, um die Schneidkante 154 der Schneide 130 im erforderlichen Umfang schärfen zu können.

Anzumerken ist des Weiteren, dass die Werkzeughalterung der Aufnahme 124 - entsprechend der Haken 24 - austauschbar mit dem Gestänge 138 verbunden wie verschraubt sein kann.

An dem Gestänge 138 können entsprechend der Befestigung unterschiedliche Werkzeugaufnahmen befestigt werden, je nach dem, in welchem Bearbeitungsbereich der zweite Förderer verläuft bzw. welchen Bearbeitungsbereich dieser durchläuft, um entsprechend den durchzuführenden Bearbeitungen Werkzeuge zur Verfügung zu stellen.

Der Fig. 2 ist des Weiteren rein prinzipiell zu entnehmen, dass die das Bearbeiten durchführenden Personen 18 auf einem Bodenförderer 32 stehen, der synchron mit der Bewegung des ersten Förderers 14 bewegt wird mit der Folge, dass die Personen 18 während des Bearbeitens stehen bleiben können.

Um in die Ausgangsposition, also nach dem Bearbeiten an den Anfang des Bearbeitungsbereichs 20 zu gelangen, kann gleichfalls ein Bodenförderer 34 benutzt werden, der sich im schlachttierfernliegenden Bereich des Arbeitsplatzes 16 befindet. Anstelle zweier Bodenförderer 32, 34 kann auch ein umlaufender Bodenförderer eingesetzt werden.

Im Förderweg des schlachttierfernliegenden oder schlachttierabgewandten Bereichs des Bodenförderers 34 kann des Weiteren eine Reinigungsstation 36 vorgesehen sein, um im erforderlichen Umfang z. B. die Bekleidung der Personen 18 wie Schürze und/oder deren Arme und/oder Hände zu reinigen, um Hygienevorschriften zu genügen.

## Patentansprüche

1. Verfahren zum Zurverfügungstellen von handbetätigten Werkzeugen (28) zum Bearbeiten von Schlachttieren (10), die entlang eines Förderwegs in einem Arbeitsbereich (16) mittels eines ersten Förderers (14) gefördert werden,
**dadurch gekennzeichnet,**
**dass** mittels eines zweiten Förderers (22) in den Förderweg des ersten Förderers (14) Werkzeuge (28) enthaltende Aufnahmen (24, 25, 124) synchron mit der Förderung der Schlachttiere (10) eingeschleust werden und dass die Aufnahmen innerhalb des Arbeitsbereichs (16) mittels des zweiten Förderers synchron mit den Schlachttieren gefördert werden.

2. Verfahren nach Anspruch 1,
**dadurch gekennzeichnet,**
**dass** Abstand und Anzahl der Aufnahmen (24, 25, 124) auf die von dem ersten Förderer (14) geförderten Schlachttiere (10) derart abgestimmt werden, dass im Bearbeitungsbereich zwischen zwei aufeinanderfolgenden Schlachttieren eine Aufnahme zur Verfügung steht.

3. Verfahren nach Anspruch 1 oder 2,
**dadurch gekennzeichnet,**
**dass** ein Endlosförderer als der zweite Förderer (22) verwendet wird und dass innerhalb der Förderstrecke des zweiten Förderers eine Reinigungs- und/oder Sterilisationsstation (30) vorgesehen wird.

4. Anordnung zum Bearbeiten von Schlachttieren (10), umfassend
- einen Arbeitsbereich (16), in dem die Schlachttiere mit einem Werkzeug (28) bearbeitet werden,
- einen die Schlachttiere entlang eines Förderwegs durch den Arbeitsbereich fördernden ersten Förderer (14),
- Aufnahmen (24, 25, 124) für die Werkzeuge und
- einen entlang des Förderwegs verlaufenden Bearbeitungsbereich (20) für Personen (18), die die Schlachttiere mit den Werkzeugen bearbeiten,
**dadurch gekennzeichnet,**
**dass** die Anordnung einen die Aufnahmen (24, 25, 124) fördernden zweiten Förderer (22) aufweist, dass der zweite Förderer entlang des in dem Arbeitsbereich (16) verlaufenden Förderwegs mit der Bewegung des ersten Förderers (14) synchronisiert und in Bezug auf die Schlachttiere (10) derart ausgelegt ist, dass zwischen aufeinanderfolgenden Schlachttieren eine Aufnahme zur Verfügung steht, die in dem Arbeitsbereich mit der gleichen Geschwindigkeit wie die Schlachttiere gefördert wird.

5. Anordnung nach Anspruch 4,
**dadurch gekennzeichnet,**
**dass** die Aufnahmen (24, 25, 124) oder von dem zweiten Förderer (22) ausgehende und mit den Aufnahmen verbundene Halterungen im Bearbeitungsbereich (20) mit einer Verstelleinrichtung (26) wie entlang des Förderwegs verlaufende Anlaufschiene derart wechselwirken, dass die Aufnahmen in Richtung des Bearbeitungsbereichs verstellt sind.

6. Anordnung nach Anspruch 4 oder 5,
**dadurch gekennzeichnet,**
**dass** der zweite Förderer (22) ein Endlosförderer ist, in dessen Förderstrecke zumindest eine Reinigungs- und/oder Hygienestation (30) zum Reinigen der Aufnahmen (24, 124) bzw. die von diesen gehaltenen Werkzeuge (28) angeordnet ist.

7. Anordnung nach zumindest einem der Ansprüche 4 bis 6,
**dadurch gekennzeichnet,**
**dass** zumindest zwei Werkzeuge (28) von einer Aufnahme (24, 124) aufnehmbar sind.

8. Anordnung nach zumindest einem der Ansprüche 4 bis 7,
**dadurch gekennzeichnet,**
**dass** im Bearbeitungsbereich (20) zumindest ein die Personen (18) entlang des Förderwegs fördernder Bodenförderer (32) verläuft.

9. Anordnung nach zumindest einem der Ansprüche 4 bis 8,
**dadurch gekennzeichnet,**
**dass** im Bearbeitungsbereich (20) ein umlaufender oder zwei entlang des Förderwegs (32, 34) verlaufende Bodenförderer angeordnet ist bzw. sind, mittels dessen bzw. derer die Personen schlachttierseitig in Förderrichtung der Schlachttiere und im schlachttierfernliegenden Bereich entgegen der Förderrichtung transportierbar sind.

10. Anordnung nach zumindest einem der Ansprüche 4 bis 9,
**dadurch gekennzeichnet,**
**dass** sich im schlachttierfernliegenden Bereich eine Reinigungsstation (36) wie Schürzenreinigungsstation und/oder Hand- und/oder Armreinigungsstation befindet.

11. Anordnung nach zumindest einem der Ansprüche 4 bis 10,
**dadurch gekennzeichnet,**
**dass** die Aufnahme (124) als L-förmige Halterung ausgebildet ist, die eine einen Schlitz (144) aufweisende Basisplatte (134) und eine von dieser ausgehende und senkrecht zu dieser verlaufende Trägerplatte (136) aufweist, von der seinerseits eine vorzugsweise klemmende Befestigung (142) für eine Handhabe wie Griff (132) des Werkzeugs (128) ausgeht.

12. Anordnung nach zumindest einem der Ansprüche 4 bis 11,
**dadurch gekennzeichnet,**
**dass** die Aufnahme (124) zumindest einen Magneten (137) zum Fixieren des Werkzeugs (128) bzw. dessen Schneide (130) aufweist.

## Claims

1. Method for making available manually used tools (28) for processing slaughtered animals (10) that are conveyed along a conveying path in a work area (16) by means of a first conveyor (14),
**wherein**
receptacles (24, 25, 124) containing tools (28) are brought by means of a second conveyor (22) into the conveying path of said first conveyor (14) synchronously with the conveying of said slaughtered animals (10), and said receptacles are conveyed inside said work area (16) by means of said second conveyor synchronously with said slaughtered animals.

2. Method according to claim 1,
**wherein**
spacing and number of the receptacles (24, 25, 124) are matched to the slaughtered animals (10) conveyed by the first conveyor (14) such that one receptacle is available between two successive slaughtered animals in the processing area.

3. Method according to claim 1 or 2,
**wherein**
an endless conveyor is used as the second conveyor (22) and a cleaning and/or sterilisation station (30) is provided inside the conveying section of the second conveyor.

4. Arrangement for processing slaughtered animals (10), comprising
▪ a work area (16), in which the slaughtered animals are processed with a tool (28),
▪ a first conveyor (14) conveying said slaughtered animals along a conveying path through said work area,
▪ receptacles (24, 25, 124) for the tools and
▪ a processing area (20) extending along the conveying path for personnel (18) who process said slaughtered animals using said tools,
**wherein**
the arrangement has a second conveyor (22) conveying said receptacles (24, 25, 124), and said second conveyor is synchronized along the conveying path extending in said work area (16) with the movement of said first conveyor (14) and in relation to the slaughtered animals (10) is designed such that a receptacle is available between successive slaughtered animals which is conveyed in said work area at the same speed as said slaughtered animals.

5. Arrangement according to claim 4,
**wherein**
the receptacles (24, 25, 124) or holders originating from the second conveyor (22) and connected to said receptacles interact in the processing area (20) with an adjusting device (26) such as a contact rail extending along the conveying path such that the receptacles are adjusted in the direction of the processing area.

6. Arrangement according to claim 4 or 5,
**wherein**
the second conveyor (22) is an endless conveyor in whose conveying section at least one cleaning and/or hygiene station (30) is arranged for cleaning of the receptacles (24, 124) or of the tools (28) held therein.

7. Arrangement according to at least one of claims 4 to 6,
**wherein**
at least two tools (28) are receivable by one receptacle (24, 124).

8. Arrangement according to at least one of claims 4 to 7,
**wherein**
at least one floor conveyor (32) conveying the personnel (18) along the conveying path extends in the processing area (20).

9. Arrangement according to at least one of claims 4 to 8,
**wherein**
one continuous floor conveyor or two floor conveyors extending along the conveying path (32, 34) is/are arranged in the processing area (20), by means of which the personnel are transportable in the conveying direction of the slaughtered animals on the slaughtered animal side and against the conveying direction in the area away from the slaughtered animals.

10. Arrangement according to at least one of claims 4 to 9,
**wherein**
a cleaning station (36) such as an apron cleaning station and/or a hand and/or arm cleaning station is located in the area away from the slaughtered animals.

11. Arrangement according to at least one of claims 4 to 10,
**wherein**
the receptacle (124) is designed as an L-shaped holder that has a base plate (134) containing a slot (144) and a carrier plate (136) originating therefrom and extending perpendicular thereto, from which carrier plate a preferably clamping-type fastening (142) for a handle or grip (132) of the tool (128) originates.

12. Arrangement according to at least one of claims 4 to 11,
wherein
the receptacle (124) has at least one magnet (137) for fixing of the tool (128) or its cutting edge (130).

## Revendications

1. Procédé de mise à disposition d'outils manuels (28) pour traiter des animaux d'abattage (10) qui sont transportés le long d'une voie de transport dans une zone de travail (16) au moyen d'un premier convoyeur (14),
**caractérisé en ce**
**que** des supports (24, 25, 124) contenant des outils (28) sont introduits, dans la voie de transport du premier convoyeur (14), de manière synchrone au convoyage des animaux d'abattage (10), au moyen d'un second convoyeur (22) et que les supports à l'intérieur de la zone de travail (16) sont transportés de manière synchrone aux animaux d'abattage au moyen dudit second convoyeur.

2. Procédé selon la revendication 1
**caractérisé en ce**
**que** l'écart entre les supports (24, 25, 124) et leur nombre sont ajustés en fonction des animaux d'animaux d'abattage (10) transportés par le premier convoyeur (14) de façon à ce qu'un support soit disponible entre deux animaux d'abattage successifs dans la zone de traitement.

3. Procédé selon la revendication 1 ou 2
**caractérisé en ce**
**qu'**un convoyeur sans fin est utilisé comme second convoyeur (22) et qu'une station de nettoyage et/ou de stérilisation (30) est prévue à l'intérieur de la voie de transport du second convoyeur.

4. Arrangement pour traiter les animaux d'abattage (10), comprenant
▪ une zone de travail (16) dans laquelle les animaux d'abattage sont traités à l'aide d'un outil (28),
▪ un premier convoyeur (14) transportant les animaux d'abattage à travers la zone de travail en suivant une voie de transport,
▪ des supports (24, 25, 124) destinés aux outils et
▪ une zone de traitement (20) s'étendant le long de la voie de transport et destinée aux personnes (18) traitant les animaux d'abattage avec les outils,
**caractérisé en ce**
**que** l'arrangement présente un second convoyeur (22) transportant les supports (24, 25, 124), que le second convoyeur est synchronisé, le long de la voie de transport s'étendant dans la zone de travail (16), avec le mouvement du premier convoyeur (14) et est conçu par rapport aux animaux d'abattage (10) de manière à ce qu'un support soit disponible entre deux animaux d'abattage successifs, lequel support est transporté dans la zone de travail à la même vitesse que les animaux d'abattage.

5. Arrangement selon la revendication 4,
**caractérisé en ce**
**que**, dans la zone de traitement (20), les supports (24, 25, 124) ou les fixations reliées aux supports et partant du second convoyeur (22) interagissent avec un de déplacement (26), tel un rail s'étendant le long de la voie de transport, de telle sorte que les supports sont dirigés vers la zone de traitement.

6. Dispositif Arrangement selon la revendication 4 ou 5,
**caractérisé en ce**
**que** le second convoyeur (22) est un convoyeur sans fin dans la voie de transport duquel se trouve au moins une station de nettoyage et/ou de stérilisation (30) servant à nettoyer les supports (24, 124) ou les outils (28) que ceux-ci portent.

7. Arrangement selon une des revendications 4 à 6,
**caractérisé en ce**
**qu'**au moins deux outils (28) peuvent être portés par un support (24, 124).

8. Arrangement selon au moins une des revendications 4 à 7,
**caractérisé en ce**
**qu'**au moins un convoyeur au sol (32) transportant les personnes (18) le long de la voie de transport s'étend dans la zone de traitement (20).

9. Arrangement selon au moins une des revendications 4 à 8,
**caractérisé en ce**
**qu'**un convoyeur au sol en boucle ou deux convoyeurs au sol s'étendant le long de la voie de transport (32, 34) est/sont disposé(s) dans la zone de traitement (20) au moyen duquel/desquels les personnes peuvent être transportées dans le sens de transport des animaux d'abattage côté animaux d'abattage et dans le sens inverse sur le côté opposé aux animaux d'abattage.

10. Arrangement selon au moins une des revendications 4 à 9,
**caractérisé en ce**
**qu'**une station de nettoyage (36) telle qu'une station de nettoyage de tabliers et/ou une station de lavage des mains et/ou des bras se trouve dans la zone opposée aux animaux d'abattage.

11. Arrangement selon au moins une des revendications 4 à 10,
**caractérisé en ce**
**que** le support (124) est conçu sous la forme d'un support en forme de L, qui présente une plaque de base (134) munie d'une fente (144) et une plaque-support (136) partant de celle-ci et s'étendant à la verticale de celle-ci, une fixation (142) de préférence à pince pour une poignée telle que le manche (132) de l'outil (128) partant de ladite plaque-support.

12. Arrangement selon au moins une des revendications 4 à 11,
**caractérisé en ce**
**que** le support (124) présente au moins un aimant (137) pour fixer l'outil (128) ou sa lame (130).
